# EUROPEAN PATENT APPLICATION

(11) **EP 1 291 244 A1**
(43) Date of publication of application: **12.03.2003**
(21) Application number: 01273680.7
(22) Date of filing: 17.12.2001
(51) Int. Cl.: B60R 1/064

(54) **MANUALLY HOUSED BACK MIRROR**

(30) Priority: 05.02.2001 JP 2001027606
(71) Applicant: Murakami Corporation, Shizuoka-shi, Shizuoka, 422-8569 (JP)
(72) Inventor: WARASINA, Toru, Shizuoka-shi, Shizuoka 421-0113 (JP); KAWAMOTO, Masanori, Fujieda-shi, Shizuoka 426-0071 (JP)
(74) Representative: Zimmermann, Gerd Heinrich
(86) International application number: JP0111028
(87) International publication number: WO02062622

(57) **Abstract**

The present invention provides a rearview mirror enabled to achieve fold and return operations to be manually performed from a vehicle side. A turning operation lever 111 can turn a clutch plate 46 through a link 110 to thereby turn a frame 56 from a used position to a folded position. Incidentally, in a normal state, the frame 56 placed at the used position is fixed by the engagement between a locking groove 53 of the clutch plate 46 and a convex part 78 in such a way as not to turn. The locking lever 123 can turn a locking operation cam 36 through a link 122. A cam part 38 and the convex part 78 are push-slid by this turning operation of the locking operation lever 123. A clutch pin 76 moves against a pushing force of a coiled spring 84 to a place that is more outside than a peripheral surface 47 of the clutch plate 46. Thus, the engagement between the convex part 78 and the locking groove 53 is canceled. A result of this cancellation, the frame 56 can freely turn between the used position and the folded position by using the turning operation lever 111.

## Description

### Technical Field

This invention relates to a vehicle rearview mirror having a housing-and-folding structure.

### Background Art

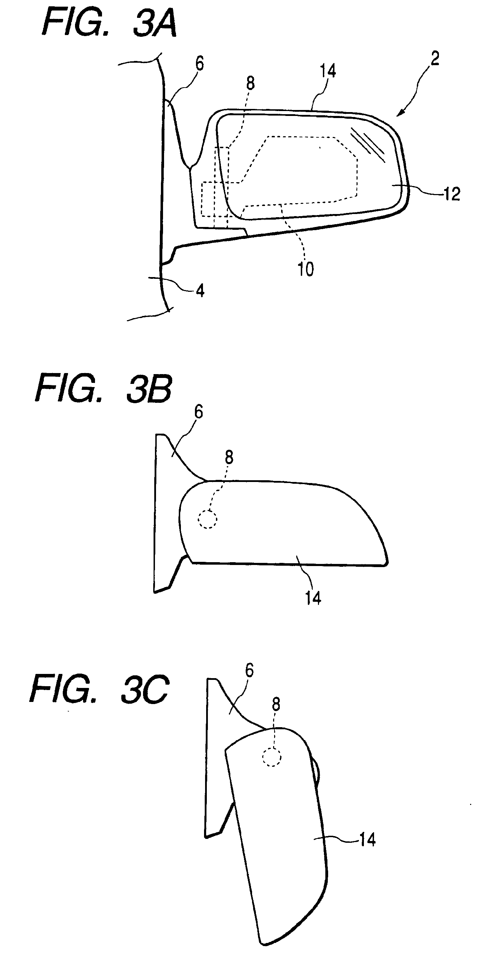

Rearview mirrors to be attached to the exterior of a vehicle are respectively attached to both sides thereof, which are provided across the full width thereof, in such a way as to outwardly project therefrom. Therefore, when the vehicle stops at a relatively narrow parking area, each rearview mirror thereof narrows a space between this vehicle and another vehicle that parks adjacently thereto, or between this vehicle and a wall. This impedes the passage of a passer through such a space. Further, when the vehicle goes into a narrow alley or parking area, the rearview mirrors impede the vehicle. FIG. 3A is a front view illustrating a state in which a conventional rearview mirror 2 is seen from the rear of a vehicle. FIG. 3B is a plan view taken from above, illustrating the rearview mirror 2 shown in FIG. 3A. As shown in FIG. 3A, in the case of the conventional rearview mirror 2, a base 6 thereof is provided at a triangular corner part of a front door of a vehicle 4. The base 6 is provided with a shaft 8 so that the shaft 8 protrudes therefrom. A frame 10 is attached to the shaft 8 in such a way as to be able to turn around the shaft 8. Amirror holder (not shown) and a mirror housing 14 are fixed to the frame 10. A mirror 12 is held by the mirror holder. As shown in FIG. 3C, the mirror housing 14 can be folded by being turned around the shaft 8, which is employed as a shaft axis, toward the rear of the vehicle 4. Thus, the quantity of projection of the rearview mirror 2 from both sides provided across the full width of the vehicle 4 is reduced by folding the mirror housing 14 in this manner. Consequently, even when the vehicle 4 goes into a narrow parking area, the rearview mirror 2 does not hinder the passage of a passer. Moreover, the vehicle 4 can go into a narrow alley.

A certain conventional foldable rearview mirror is adapted so that a mirror housing is hand-held from the outside of a vehicle and brought into a foled state. Another conventional rearview mirror using an electric motor is adapted to be operated from the inside of a vehicle by using a remote control switch in such a way as to perform a folding operation.

However, between the conventional folded type rearview mirrors, the manually folded type mirror requires that a driver opens a window so as to perform an operation of folding the mirror housing, and that the driver manually brings the mirror housing into a folded state. The rearview mirror using the electric motor needs the motor and switches. This results in increase in the cost and weight of the rearview mirror.

This invention provides a rearview mirror that can be operated from the inside of a vehicle and that achieves folding and returning operations without using an electric motor.

### Disclosure of the Invention

According to this invention, there is provided a manually folded type rearview mirror having a base, which is fixed to a vehicle, and also having a cylindrical shaft provided on the base in such a way as to project therefrom, and a frame, which is provided in such a way as to be able to turn around the shaft, for supporting a mirror housing, so that the frame is adapted to turn between a used position and a folded position. This rearview mirror comprises a turning operation means disposed on a vehicle interior side, a turning operation transmitting mechanism for transmitting an operating force of the turning operation means to the frame to thereby achieve the turning operation of the frame, a locking means for acting between the base and the frame to thereby put the turning operation into a locked state, and for fixing the frame to the used position, a locking operation means disposed on the vehicle interior side, and a locking operation transmitting mechanism for transmitting an operating force of the locking operation means to the locking means, and for changing a state of the locking means from the locked state to a locking cancellation state. According to this, fold and return operations of the rearview mirror can be manually performed from a vehicle interior side.

Further, according to this invention, the locking means may comprise a concave part or a convex part, which is provided in the base, and a convex part or a concave part provided in the frame in such a way as to be fitted to the concave part or the convex part. Moreover, the locked state may be realized by causing these concave and convex parts to perform a relative displacement, and fitting these concave and convex parts to each other, and canceled by detaching the fitted concave and convex parts from each other.

Furthermore, according to this invention, the locking means may comprise a base-side member supported by the base, and a frame-side member adapted to turn around the shaft together with the frame as a single unit. Further, the base-side member may comprise a moving member that is disposed in such a way as to be able to move in a direction, in which the moving member approaches and goes away from an outer peripheral surface of the frame-side member, and that has the convex part formed at an end thereof, and may further comprise a pushing means for pushing the moving member in a direction in which the moving member approaches the outer peripheral surface of the frame-side member . Moreover, the concave part, to which the convex part of the moving member is fitted, may be provided in the outer peripheral surface of the frame-side member. Furthermore, the moving member may be moved in a direction, in which the moving member approaches the outer peripheral surface of the frame-side member, by a pushing force of the pushing means to thereby realize the locked state, and moves against the pushing force in a direction, in which the moving member goes away from the outer peripheral surface of the frame-side member, to thereby cancel fitting thereof into the concave part and cancel the locked state.

Further, according to this invention, the locking operation transmitting mechanism may have a cam member having a cam part formed on an outer circumferential surface thereof, and turned around the shaft. Moreover, the convex part may be disposed in such a way as to be in a state in which a part of the convex part is caused by a pushing force of the pushing means to abut against the cam part of the cam member. Furthermore, the cam member may be caused by an operating force of the locking operation means to perform a turning operation of turning around an axis of the shaft. Further, the cam part of the cam member may be provided in such a way as to push the moving member against the pushing force of the pushing means by the turning operation in a direction, in which the moving member goes away from the outer peripheral surface of the frame-side member, to thereby cancel fitting of the convex part into the concave part.

Moreover, according to this invention, the frame-side member may be constituted by a ring-like member that is adapted to be inserted onto the shaft and to be turned around the shaft, and that is separated from and independent of the frame. Furthermore, the frame may be inserted onto the shaft and disposed by being arranged with the frame-side member in a direction of an axis of the shaft in such a way as to freely turn around the shaft. Further, a fitting structure, in which a clutch convex part and a clutch concave part are fitted to each other, may be formed in an abutting surface portion between the frame-side member and the frame arranged around the shaft. Moreover, a pushing force acting in a direction of an axis of the shaft may be applied by a spring member to between the frame-side member and the frame to thereby hold the clutch convex part and the clutch concave part in a state in which the clutch convex part and the clutch concave part are fitted to each other in the abutting surface portion. Furthermore, when an external force acting around an axis of the shaft and having a magnitude, which is equal to or more than a predetermined value, is applied to the frame, the fitting of the clutch convex part into the clutch concave part provided in the abutting surface portion may be canceled against the pushing force of the spring member, so that the frame is separated from the frame member and singly turned by the external force around the shaft.

Further, according to this invention, the turning operation transmitting mechanism may transmit the operating force of the turning operation means to the frame through the frame-side member.

### Brief Description of Drawings

FIG. 1 is a longitudinally sectional diagram illustrating an embodiment of this invention.
FIG. 2 is an exploded perspective diagram illustrating the component configuration of a rearview mirror 20 shown in FIG. 1.
FIG. 3 is a diagram illustrating front and plan views that show a conventional rearview mirror.
FIG. 4 is a sectional diagram taken in the direction of an arrow A of FIG. 1, illustrating the rearview mirror 20.
FIG. 5 is a plan diagram illustrating an operating state of the rearview mirror 20 of FIG. 1.
FIG. 6 is a diagram illustrating sectional views of the rearview mirror 20, which are taken in the directions of arrows B and C of FIG. 1, respectively.
FIG. 7 is a plan diagram illustrating an operating state of the rearview mirror 20 of FIG. 1.
FIG. 8 is a sectional diagram taken in the direction of the arrowAof FIG. 1, illustrating the rearviewmirror 20.

### Best Mode for Carrying out the Invention

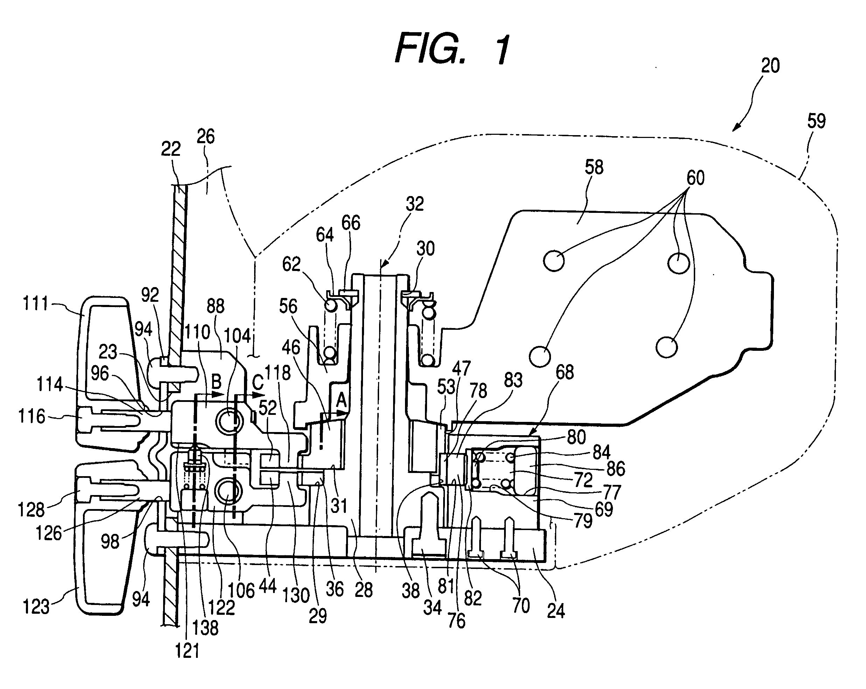

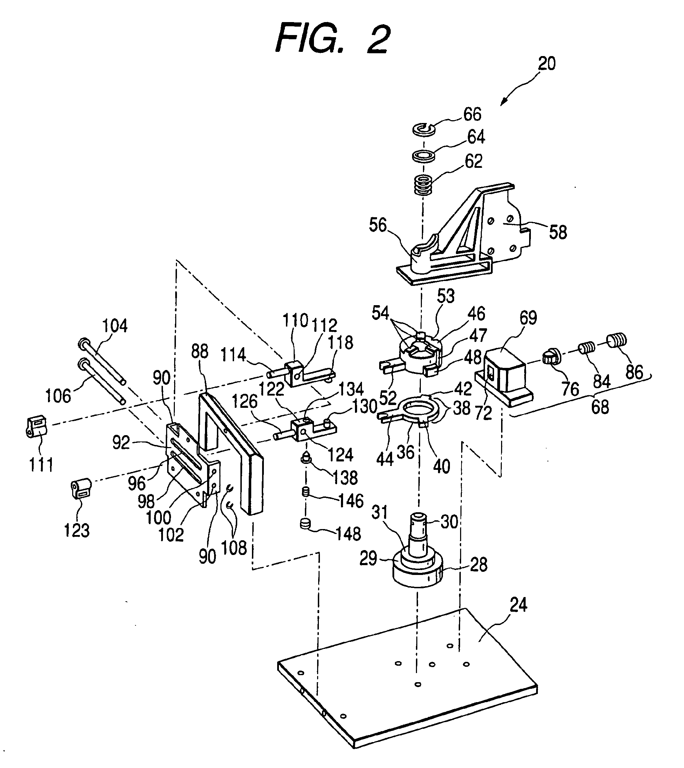

An embodiment of this invention is described hereinbelow. FIG. 1 is a longitudinally sectional diagram illustrating a rearview mirror 20 according to this invention. Further, FIG. 2 is an exploded perspective diagram illustrating the rearview mirror 20 of FIG. 1 by omitting a mirror housing 59 and a base cover 26.

In the mirror of FIG. 1, a base 24 is formed from a metal, and fixed to a vehicle outer plate 22. The base cover 26 formed from a resin is attached to the base 24 in such a way as to cover and hide the exterior of the base 24. Further, a cylindrical shaft 28 formed from a metal is disposed on the base 24 in such a manner as to project therefrom perpendicularly thereto, and fixed thereto by a screw 34. A slit 30 extending in a horizontal direction is formed in the vicinity of the top end of the shaft 28. A locking operation cam 36 formed like a ring from a metal is inserted onto the shaft 28, and put on a step-like part 29, and supported in such a way as to be able to turn around a rotation axis 32. A cam part 38 is formed on an outer circumferential surface of the locking operation cam 36 in such a way as to cause a change in radius of the outer periphery thereof. A convex locking part 40 and a convex locking part 42 are formed at both circumferential end parts of the cam part 38 provided on the outer circumferential surface of the locking operation cam 36. A U-shaped convex part 44 having a convex-shaped and U-shaped end portion is formed on a circumferential region, on which the cam part 38 and the locking part 40 and the locking part 42 are not formed, of the outer periphery of the locking operation cam 36.

A clutch plate 46 formed like a ring from a metal is inserted onto the shaft 28 and put on the step-like part 31 and supported thereon in such a manner as to be separated from the locking operation cam 36 and as to be able to turn around the rotation axis 32. The clutch plate 46 has a locking part 48, a locking part 50, and a U-shaped convex part 52 having a U-shaped end portion, which are respectively provided at angular positions similar to those of the corresponding parts of the locking operation cam 36. A locking groove 53 extending in an axial direction between the locking part 48 and the locking part 50 is formed in a circumferential surface part 47 of the clutch plate 46. Radial-rib-like clutch convex parts 54 are formed at three places, which are located at angular intervals of almost 120 degrees around the rotation axis 32, on the top surface of the clutch plate 46.

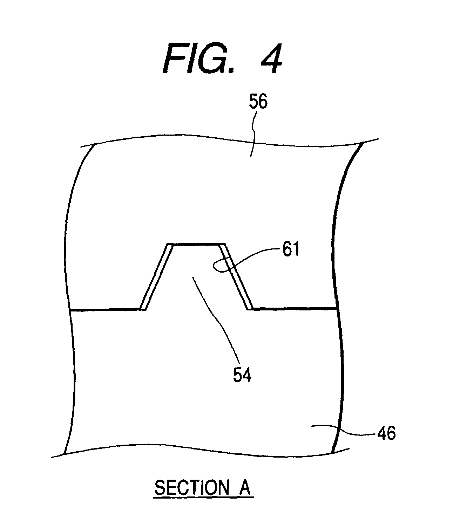

A frame 56 formed from a resin or a metal is inserted onto the shaft 28, and put on the clutch plate 46 and supported thereon in such a way as to be able to turn around the rotation axis 32. FIG. 4 shows a section A illustrated in FIG. 1. A clutch concave part 61 corresponding to the clutch convex part 54 of the clutch plate 46 is formed in the bottom surface part provided around the rotation axis 32 of the frame 56, as illustrated in FIG. 4. The frame 56 is provided with a mirror housing holding part 58 extending toward the outside of the vehicle like a thin plate. A mirror housing 59 is fixed to the mirror housing holding part 58 by a screw 60. The frame 56 is provided in such a way as to be able to turn around the rotation axis 32, so that the mirror housing 59 can be turned by turning the frame 56. A coiled spring 62 formed from a metal is inserted onto the shaft 28 and put on and supported by the top surface of parts of the frame 56, which are provided around the rotation axis 32. A ring 64 formed from a metal is inserted onto the shaft 28 and put on and supported by the top end part of the coiled spring 62. A U-shaped plate 66 formed from a metal is fitted from sideways into the slit 30 provided in an upper part of the shaft 28. The coiled spring 62 is pushed by the ring 64 from above and maintains a pushed state by inserting the U-shaped plate 66 into the slit 30 during a state in which the coiled spring 62 is pushed. The clutch convex part 54 of the clutch plate 46 is fitted into the clutch concave part 61 of the frame 56 during the pushed state by pushing the coiled spring 62. During a state in which an external force acting in a circumferential direction of the rotation axis 32 and having a magnitude, which is equal to or more than a predetermined value, is not applied to the frame 56, the clutch plate 46 and the frame 56 can turn around the rotation axis 32 as one unit.

A clutch pin supporting member 69 of a base-side member 68 of the locking member, which is formed like a hexahedron from a metal is fixed to the base 24 by screws 70. A through hole 72 is formed in the clutch pin supporting member 69 in such amanner as to be directed toward the shaft 28. The through hole 72 consists of a circular part 79, which is formed in such a fashion as to have a circular section at some distance from the shaft 28, and a rectangular part 81 formed in such a way as to have a rectangular section at a place to the shaft 28. A clutch pin 76 formed from a metal, and a coiled spring 84 formed from a metal are serially inserted into the through hole 72. The clutch pin 76 has a rectangular part 83, which has an oblong rectangular section and is inserted into the rectangular part of the through hole 72 in such a way as to be able to be freely put thereinto and taken out therefrom, and a locking part 82, which has a circular section and is formed at the base end portion thereof and inserted into the circular part 79 of the through hole 72 in such a way as to be freely put thereinto and taken out therefrom.

A convex part 78 provided at an end of the rectangular part 83 of the clutch pin 76 protrudes from the rectangular part 81 of the through hole 72. The locking part 82 receives a pushing force of the coiled spring 84 on a receiving face 80 of the back surface thereof. The coiled spring 84 is pushed and shrank by screw-fixing a screw 86 to a screw portion 77 of an end part of the through hole 72. The clutch pin 76 is pushed in a direction in which the convex part 78 projects from the through hole 72. At a used position of the mirror, an upper portion of the convex part 78 of the clutch pin 76 pushed by the coiled spring 84 is fitted into the locking groove 53 of the clutch plate 46. An end surface of a lower portion of the convex part 78 abuts against the cam part 38 of the locking operation cam 36.

A guide fixing part 88 formed from a metal is fixed to the base 24 by a screw (not shown) . At the position of the opening part 23 formed in the vehicle outer plate 22, the guide fixing part 88 is caused from the outside of a vehicle interior to abut against the vehicle outer plate 22. Aflat-plate-like guide 92 formed from a metal is caused from the inside of the vehicle to abut against the vehicle outer plate 22. The guide 92 is sandwiched by screws 94 on the vehicle outer plate 22, and fixed to the guide fixing part 88. Thus, the rearview mirror 20 is fixed to the vehicle outer plate 22. In the guide 92, an opening part 96 (corresponding to an upper step) and an opening part 98 (corresponding to a lower step) , which extend in a horizontal direction, are formed as two steps, that is, upper and lower steps. Bending parts 90 bent in a direction, in which the shaft 28 is disposed, are formed at both end parts of the guide 92, respectively. A rail locking hole 100 (corresponding to an upper step) and a rail locking hole 102 (corresponding to a lower step) are formed at positions, whose heights are respectively equal to those of the opening part 96 and the opening part 98, of both the bending parts 90. A rail 104 and a rail 106 are respectively inserted into the rail locking hole 100 and the rail locking hole 102, and fixed by locking members 108, such as retaining rings.

A rail 104 and a rail 106 are respectively inserted into a rail hole 112 and a rail hole 124, each of which is formed in the vicinity of a central part of a corresponding one of a link 110 and a link 122, and respectively support the link 110 and the link 122 so that each of the link 110 and the link 122 can be moved in the direction of an axis of a corresponding one of the rail 104 and the rail 106. Each of the link 110 and the link 122 is formed like a rod extending in a lateral direction of the vehicle. An operating lever connecting part 114 is formed at an end of the link 110, which is provided at the side of the vehicle interior. The operating lever connecting part 114 of the link 110 is passed through the opening part 96 of the guide 92. A turning operation lever 111 is inserted into an end of the operating lever connecting part 114, and fixed thereto by a screw 116. An operating lever connecting part 126 is formed at an end of the link 112, which is provided at the side of the vehicle interior. The operating lever connecting part 126 of the link 122 is passed through the opening part 98 of the guide 92. A locking operation lever 123 is inserted into an end of the operating lever connecting part 126, and fixed thereto by a screw 128. A cylindrical convex part 118 is formed at an end of the link 110, which is provided at the side of the exterior of the vehicle, in such a way as to be directed downwardly, and engages with the U-shaped convex part 52 of the clutch plate 46. A cylindrical convex part 130 is formed at an end of the link 122, which is provided at the side of the exterior of the vehicle, in such a way as to be directed upwardly, and engages with the U-shaped convex part 44 of the locking operation cam 36.

The turning operation lever 111 is hand-operated by a driver to thereby cause the link 110 to perform parallel displacement along the opening part 96. The parallel displacement motion of the link 110 is converted to a turning operation of the clutch plate 46 through an engaging part between the cylindrical convex part 118 of the link 110 and the U-shaped convex part 44 of the clutch plate 46. The locking operation lever 123 is hand-operated by the driver to thereby cause the link 122 to perform parallel displacement along the opening part 98. The parallel displacement motion of the link 122 is converted to a turning operation of the locking operation cam 36 through an engaging part between the cylindrical convex part 130 of the link 122 and the U-shaped convex part 44 of the locking operation cam 36.

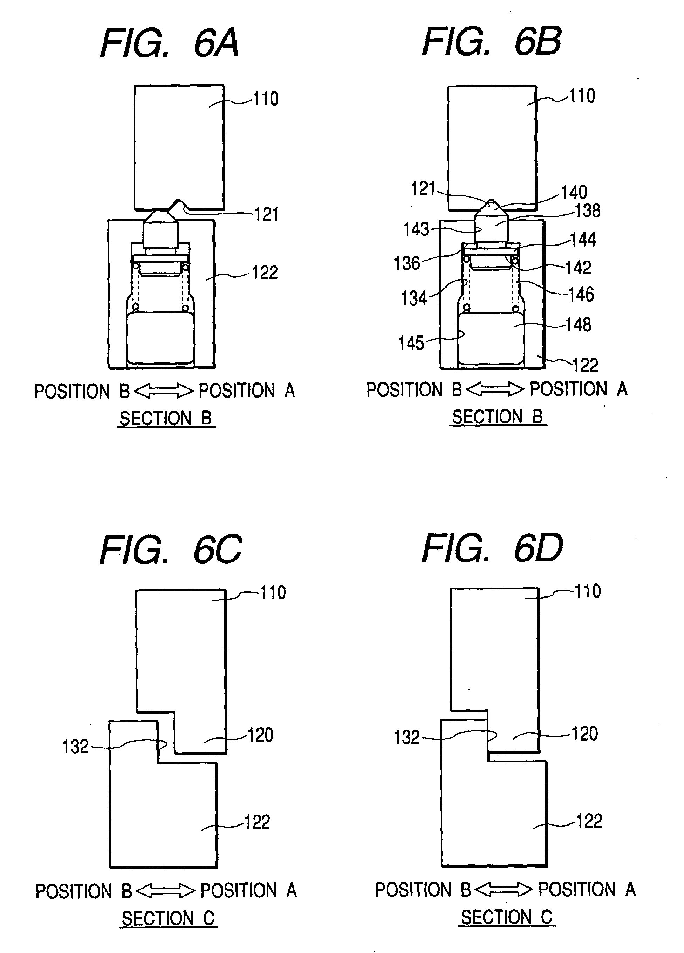

FIG. 6 shows a section B and a section C of FIG. 1. As illustrated in FIG. 6C and FIG. 6D, a convex-shaped locking convex part 120 is formed in the link 110. A concave-shaped locking concave part 132 is formed at a position, at which the link 122 butts the locking convex part 120, in the link 122. As illustrated in FIG. 6A and FIG. 6B, a longitudinal through hole 134 is formed in the link 122. The through hole 134 has a section shaped like a circle. A small-diameter part 143 is formed at an end part of the through hole 134, which is placed to the link 110. Astep-like part 136 is formed in a middle part of the through hole 134 by changing the diameter of a section. A clutch pin 138 formed from a metal, and a coiled spring 146 formed from a metal are serially inserted into the through hole 134 from a lower opening end thereof.

The clutch pin 138 is formed so that each section thereof is circular correspondingly to the through hole 134. A nearly cone-shaped convex locking part 140 is formed at an end part of the clutch pin 138. The convex locking part 140 upwardly projects from the small-diameter part 143 of the through hole 134. A locking part 144 having a circular section is formed at a rear end part of the clutch pin 138. The locking part 144 receives a pushing force of the coiled spring 146 on a receiving face 142 of the back surface thereof. The coiled spring 146 is pushed and shrank by screw-fixing a screw 148 to a screw portion 145 of an end part of the through hole 134. The clutch pin 138 is pushed in a direction in which the convex locking part 140 upwardly projects from the through hole 134. At a used position of the mirror, an upper portion of the convex part 78 of the clutch pin 76 pushed by the coiled spring 84 is fitted into the locking groove 53 of the clutch plate 46. In the bottom surface part of the link 110, a concave part 121, into which the convex locking part 140 projecting from the top surface of the link 122, is formed. As shown in FIGS. 6B and 6D, at a position at which the link 110 overlaps with the link 122 in an upward or downward direction, the locking convex part 120 and the locking concave part 132 abut against each other. Moreover, the convex locking part 140 of the clutch pin 138 pushed by the coiled spring 146 is brought into a state in which the locking part 140 is fitted into the concave part 121 of the link.

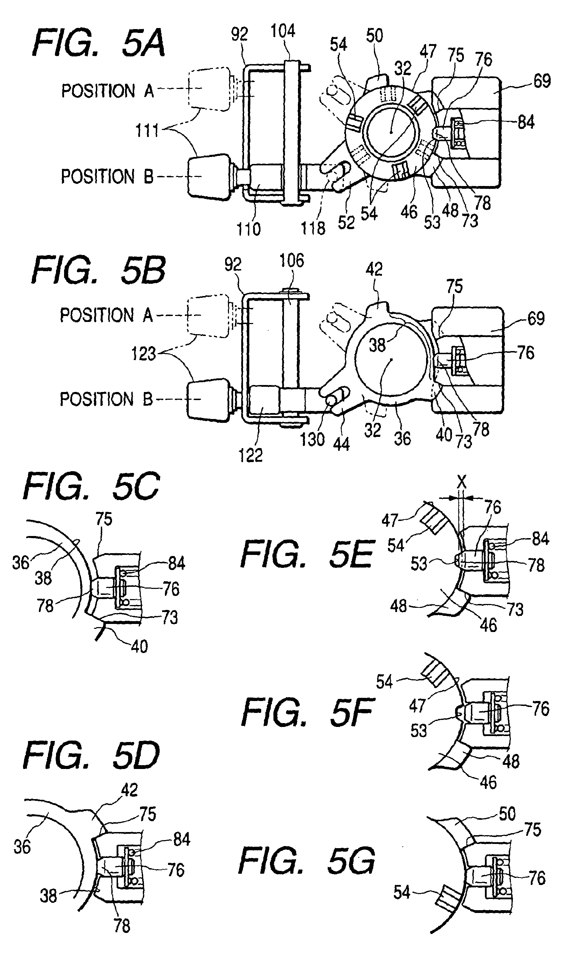

An operating state of the clutch plate 46 and the locking operation cam 36 is described hereinbelow by referring to FIG. 5. FIG. 5A is a plan view illustrating an operation state of the turning operation lever 111 and the clutch plate. FIG. 5B is a plan view illustrating an operation state of the locking operation lever 123 and the locking operation cam 36. FIGS. 5C and 5D illustrate operating states of the clutch pin 76, which are caused by the cam part 38 of the locking operation cam 36. FIGS. 5E to 5G illustrate the relative positional relation between the clutch plate 46 and the clutch pin 76. The position of the clutch pin 76 shown in FIG. 5E is taken when the cam part 38 is in a state shown in FIG. 5C. The position of the clutch pin 76 shown in FIGS. 5F and 5G is taken when the cam part 38 is in a state shown in FIG. 5D.

A case of manually folding the mirror housing from the vehicle interior is described hereinbelow. When the mirror housing 59 is in the used position state (see FIGS. 3A and 3B), both the turning operation lever 111 and the locking operation lever 123 are in a state (see FIGS. 6B and 6D) in which these levers overlap with each other at the position A (see FIGS. 5A and 5B). At that time, as shown in FIG. 5A, the locking part 48 of the clutch plate 46 abuts against the wall surface 73 of the clutch pin supporting member 69. Similarly, as shown in FIG. 5B, the locking part 40 of the locking operation cam 36 abuts against also abuts against the wall surface 73 of the clutch pin supporting member 69. Furthermore, as shown in FIG. 5E, the convex part 78 of the clutch pin 76 and the locking groove 53 of the clutch plate 46 are engaged with each other. Thus, a turning operation in a circumferential direction around the rotation axis 32 of the clutch plate 46 is prevented. Further, in the used position state, the clutch convex part 54 of the clutch plate 46 and the clutch concave part 61 of the frame 56 are in the engagement state (see FIG. 4). Thus, a relative rotation between the clutch plate 46 and the frame 56 is prevented. Therefore, the mirror housing 59 fixed to the frame 56 maintains a state in which the mirror housing 59 is fixed to the used position.

It is necessary for changing the position of the mirror housing 59 from the used position to the folded position that the engagement between the convex part 78 of the clutch pin 76 and the locking groove 53 of the clutch plate 46 is canceled. The cancellation of this engagement is performed by manually performing an operation of changing the position of the locking operation lever 123 from the position A to the position B. The locking operation cam 36 is turned a predetermined angle through an engaging part between the cylindrical convex part 130 of the link 122 and the U-shaped convex part 44 of the locking operation cam 36 by performing an operation of changing the position of the locking operation lever 123 from the position A to the position B (see FIG. 5B). The turning of the cam 36 by the predetermined angle changes the state of the locking operation cam 36 from the state shown in FIG. 5C to the state shown in FIG. 5D, so that the locking part 42 abuts against the wall surface 75. When the state shown in FIG. 5C is changed to the state shown in FIG. 5D, the diameter of the cam part 38 is set in such a manner as to increase by an amount that is equal to or more than a distance x shown in FIG. 5E from the end of the convex part 78 to the outer circumference of the clutch plate 46 (that is, to the position at which the depth of the locking groove 53 is 0). The cam part 38 is constituted by smooth surfaces, so that the convex part 78 slides on the surface of the cam part 38 against an elastic force of the coiled spring 84. Thus, the convex part 78 is pushed by this surface, and moved to a place that is more outside than the peripheral surface of the clutch plate 46 (see FIGS. 5D and 5F). When the convex part 78 of the clutch pin 76 is moved to a place, which is more outside than the peripheral surface of the clutch plate 46, as illustrated in FIGS. 5D and 5F, the engagement between the convex part 78 and the locking groove 53 is canceled. Thus, the clutch plate 46 is enabled to freely turn around the rotation axis 32.

To turn the frame 56 from the position, at which the frame 56 is in the state shown in FIGS. 5D and 5F, the turning operation lever 111 is operated in such a way as to turn from the position A to the position B. The clutch plate 46 is turned a predetermined angle through the cylindrical convex part 118 of the link 110 and the U-shaped convex part 52 of the clutch plate 46 by performing an operation of changing the position of the turning operation lever 111 from the position A to the position B (see FIG. 5G). Regarding the clutch plate 46 and the frame 56, as described above, the clutch convex part 54 and the clutch concave part 61 (see FIG. 4) are in the engagement state. Moreover, the relative rotation between the clutch plate 46 and the frame 56 is prevented. Thus, simultaneously with the turning of the clutch plate 46, the turning of the frame 56 and the mirror housing 59 is performed. Consequently, the mirror housing 59 is brought into a folded state (see FIG. 3C). At that time, the turning operation lever 111 and the locking operation lever 123 are put into a state in which these levers 111 and 123 overlap with each other in an upward or downward direction at the position B (see FIGS. 6B and 6D).

To move the mirror housing 59 from the folded position to the used position by being manually operated from the vehicle interior, the following three methods can be employed.

### (1) Method Performed by Operating Turning Operation Lever 111 and Locking Operation Lever 123

When the mirror housing 59 is in the folded state, the convex part 78 is detached from the locking groove 53, as illustrated in FIG. 5G. The turning operation lever 111 and the locking operation lever 123 are placed at the position B. The locking groove 53 of the clutch plate 46, the locking operation cam 36, and the clutch pin 76 are put into the states shown in FIGS. 5C and 5E by simultaneously picking up both the turning operation lever 111 and the locking operation lever 123 in this state and then moving both the levers 111 and 123 to the position A. The mirror housing 59 is fixed to the used position.

### (2) Method Performed by Operating Locking Operation Lever 123

When both the turning operation lever 111 and the locking operation lever 123 are placed at the position B, an operation of moving the mirror housing 59 is performed by picking up only the locking operation lever 123. At that time, as illustrated in FIG. 6D, the locking convex part 120 of the link 110 is pushed and caused to abut against the locking concave part 132 of the link 122. Thus, both the link 122 and the link 110 move to the position A. Consequently, the locking groove 53 of the clutch plate 46, the locking operation cam 36, and the clutch pin 76 are put into the states shown in FIGS. 5C and 5E. The mirror housing 59 is fixed to the used position.

### (3) Method Performed by Operating Turning Operation Lever 111

When both the turning operation lever 111 and the locking operation lever 123 are placed at the position B, an operation of moving the mirror housing 59 to the position A is performed by picking up only the turning operation lever 111. At that time, as illustrated in FIG. 6B, the convex locking part 140 of the clutch pin 138, which is movably provided in the link 122, is fitted into the concave part 121 of the link 110. Both the link 122 and the link 110 move to the position A. When both the link 110 and the link 122 move to the position A, the locking groove 53 of the clutch plate 46, the locking operation cam 36, and the clutch pin 76 are put into the state shown in FIG. 5C or 5E. The mirror housing 59 is fixed to the used position. Thus, an operation of moving the mirror housing 59 from the folded position to the used position can be performed from the vehicle interior by using any of the methods (1) to (3).

The mirror housing 59 is attached to both sides of a vehicle, which are provided across the full width thereof, in such a way as to outwardly project therefrom. Thus, an obstacle or a person may come into contact with the mirror housing 59. The mirror housing 59 can be turned by an external force in a folding direction and in an anti-folding direction in such a way as to be safe even when an obstacle or a person unexpectedly comes in contact therewith. Further, the mirror housing 59 can be directly hand-held and operated in such a way as to be put into the folded position state from the used position state and vice versa. An operation of the rearview mirror in such a case is described hereinbelow.

When the mirror housing 59 is at the used position, the rearview mirror is in the state illustrated in FIG. 5C or 5E. Thus, the locking groove 53 and the convex part 78 are in the engagement state. When an external force, whose magnitude is equal to or more than that of a constant load, is applied to the mirror housing 59 in a direction from the front of the vehicle to the rear thereof, a turning force acting in a folding direction is applied to the clutch plate 46 from the frame 56, to which the mirror housing 59 is fixed, by the engagement (see FIG. 4) between the clutch concave part 61 and the clutch convex part 54.

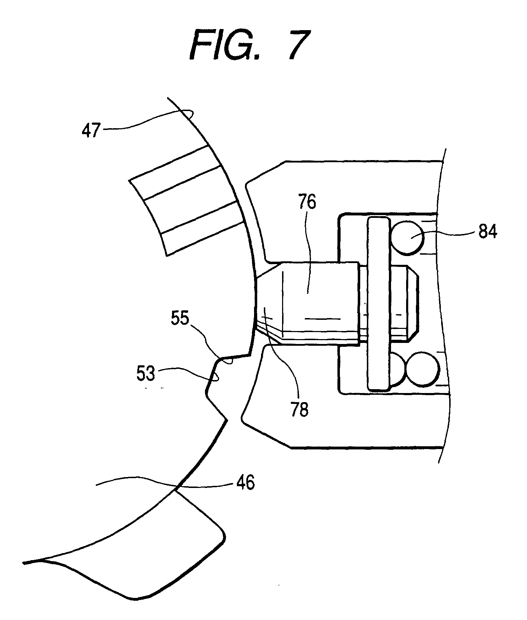

FIG. 7 illustrates the relative positional relation between the clutch plate 46 and the clutch pin 76, similarly as FIG. 5E does. When a turning force, whose magnitude is equal to or more than that of a constant load, is applied to the clutch plate 46, the convex part 78 is pushed by a slope 55 of the locking groove 53 against an elastic force of the coiled spring 84, and strands on the peripheral surface 47 of the clutch plate 46, as shown in FIG. 7. When the convex part 78 strands on the peripheral surface 47, the frame 56 adapted to turn together with the clutch plate 46 as one unit is caused by an external force, which is applied to the mirror housing 59, to freely turn, because resistance thereagainst disappears during a turning operation in the folding direction.

When the convex part 78 strands on the peripheral surface 47, the turning operation lever 111 and the locking operation lever 123 move from the position A to the position B shown in FIGS. 5A and 5B by a quantity of displacement of the frame 56, which is turned by the external force. The mirror housing 59 can be returned to the used position state (see FIG. 5C and 5E) by performing an operation of moving the turning operation lever 111 and the locking operation lever 123 or both the levers to the position A, which have been in this state. Thus, in the case that only the engagement between the locking groove 53 and the convex part 78 is canceled even when the mirror housing 59 is turned in the folding direction by an external force, the housing mirror 59 can be returned to the used position from the vehicle interior.

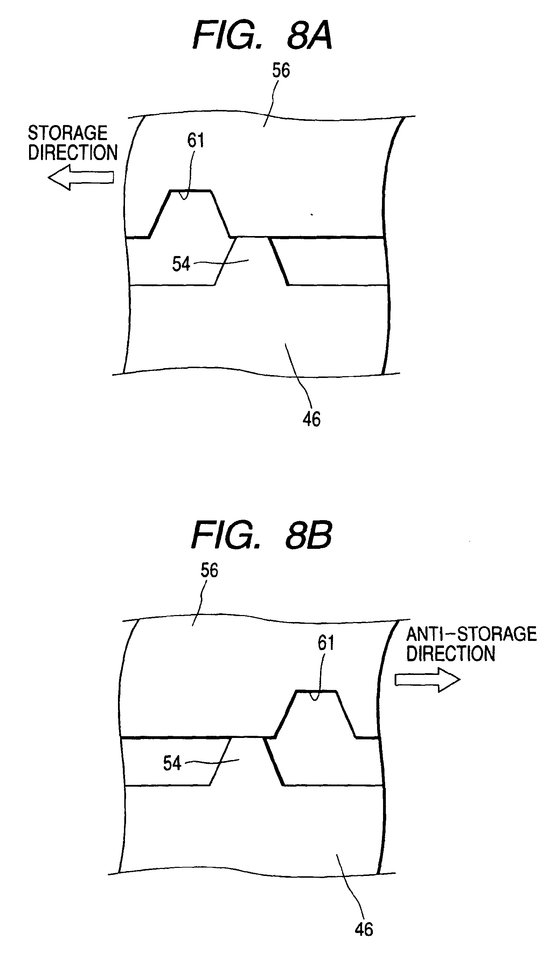

Alternatively, the frame 56 can be turned as follows. That is, the elastic force of the coiled spring 84 is adjusted by tightening the screw 86. Then, the magnitude of a force of engaging the locking groove 53 with the convex part 78 is increased in such a way as to become higher than that of a force of engaging the clutch concave part 61 with the clutch convex part 54. Thus, during the engagement between the locking groove 53 and the convex part 78 is maintained, the engagement between the clutch concave part 61 and the clutch convex part 54 is canceled. Consequently, the frame 56 can be turned. FIG. 8A shows a state in which the engagement between the clutch concave part 61 having the section A and the clutch convex part 54 shown in FIG. 1 is canceled in the folding direction. When a turning force, whose magnitude is equal to or more than a constant load, is applied to the frame 56 through the mirror housing 59, a turning force acting in the folding direction (that is, the leftward direction, as viewed in FIG. 8) is exerted on the frame 56 according to the engagement state between the clutch concave part 61 and the clutch convex part 54 shown in FIG. 4. The engagement between the clutch concave part 61 and the clutch convex part 54 is canceled against an elastic force of the coiled spring 62. Thus, the rearview mirror is put into a state illustrated in FIG. 8A.

When the engagement between the clutch concave part 61 and the clutch convex part 54 is canceled, each of the turning operation lever 111 and the turning operation lever 111 and the locking operation lever 123 does not move and remains at the position A shown in FIG. 5 even in the case that the mirror housing 59 is turned in the folding direction. Therefore, even when the mirror housing 59 is turned in the folding direction by an unexpected external force during the driver puts his hands on both the levers, the turning operation lever 111 and the locking operation lever 123 do not move. Thus, the rearview mirror is safe. Further, the mirror housing 59 turned in the folding direction is turned to the used position by being directly hand-held, so that the clutch concave part 61 and the clutch convex part 54 can be engaged with each other again and returned to the used position state.

When an external force, whose magnitude is equal to or more than that of a constant load, acting in a direction from the rear of the vehicle to the front thereof is applied to the mirror housing 59, a turning force acting in the anti-folding direction is exerted onto the clutch plate 46. However, as illustrated in FIG. 5A, when the mirror housing 59 is at the used position, the locking part 48 of the clutch plate 46 abuts against the wall surface 73, so that the cutch plate 46 does not turn in the anti-folding direction. Thus, a turning force acting in the anti-folding direction (that is, in the rightward direction, as viewed in FIG. 8B) is exerted onto the frame 56 that has received the external force. Consequently, as shown in FIG. 8B, the engagement between the clutch concave part 61 and the clutch convex part 54 is canceled. When the engagement between the clutch concave part 61 and the clutch convex part 54 is canceled, the frame 56 is caused by an external force, which is applied to the mirror housing 59, to freely turn, because resistance thereagainst disappears during a turning operation in the folding direction.

During the mirror housing 59 is caused by the external force to turn in the anti-folding direction, each of the turning operation lever 111 and the locking operation lever 123 does not move and remains at the position A, because of the cancellation of the engagement between the clutch concave part 61 and the clutch convex part 54. Further, the mirror housing 59 turned in the anti-folding direction is turned to the used position by being directly hand-held, so that the clutch concave part 61 and the clutch convex part 54 can be engaged with each other again and returned to the used position state.

Incidentally, in the foregoing embodiment, only a locking cancellation is performed as a locking operation to be performed by using the locking operation lever 123. However, the rearview mirror can be designed in such a way as to perform both the locking and the locking cancellation.

### Industrial Applicability

As described above, the manually folded type rearview mirror according to this invention is useful as a vehicle rearview mirror.

## Claims

1. A manually folded type rearview mirror having a base, fixed to a vehicle, a cylindrical shaft provided on said base in such a way as to project therefrom, and a frame, provided in such a way as to be able to turn around said shaft, for supporting a mirror housing, said frame being adapted to turn between a used position and a folded position, said rearview mirror comprising:
turning operation means disposed on a vehicle interior side;
a turning operation transmitting mechanism for transmitting an operating force of said turning operation means to said frame to thereby achieve the turning operation of said frame;
locking means for acting between said base and said frame to thereby put the turning operation into a locked state, and for fixing said frame to the used position;
locking operation means disposed on the vehicle interior side; and
a locking operation transmitting mechanism for transmitting an operating force of said locking operation means to said locking means, and for changing a state of said locking means from the locked state to a locking cancellation state.

2. A manually folded type rearview mirror according to claim 1, wherein said locking means comprises a concave part or a convex part, which is provided in said base, and a convex part or a concave part provided in said frame in such a way as to be fitted to said concave part or said convex part, and wherein the locked state is realized by causing these concave and convex parts to perform a relative displacement, and fitting these concave and convex parts to each other, and canceled by detaching said fitted concave and convex parts from each other.

3. A manually folded type rearview mirror according to claim 2, wherein said locking means comprises a base-side member supported by said base, and a frame-side member adapted to turn around said shaft together with said frame as a single unit,
wherein said base-side member comprises a moving member that is disposed in such a way as to be able to move in a direction, in which said moving member approaches and goes away from an outer peripheral surface of said frame-side member, and that has said convex part formed at an end thereof, and further comprises pushing means for pushing said moving member in a direction in which said moving member approaches said outer peripheral surface of said frame-side member,
wherein said concave part, to which said convex part of said moving member is fitted, is provided in said outer peripheral surface of said frame-side member, and
wherein said moving member is moved in a direction, in which said moving member approaches said outer peripheral surface of said frame-side member, by a pushing force of said pushing means to thereby realize the locked state, and moves against the pushing force in a direction, in which said moving member goes away from said outer peripheral surface of said frame-side member, to thereby cancel fitting thereof into said concave part and cancel the locked state.

4. A manually folded type rearview mirror according to claim 3, wherein said locking operation transmitting mechanism has a cam member having a cam part formed on an outer circumferential surface thereof, and turned around said shaft,
wherein said convex part is disposed in such a way as to be in a state in which a part of said convex part is caused by a pushing force of said pushing means to abut against said cam part of said cam member,
wherein said cam member is caused by an operating force of said locking operation means to perform a turning operation of turning around an axis of said shaft, and wherein said cam part of said cam member pushes said moving member against the pushing force of said pushing means by the turning operation in a direction, in which said moving member goes away from the outer peripheral surface of said frame-side member, to thereby cancel fitting of said convex part into said concave part.

5. A manually folded type rearview mirror according to claim 3, wherein said frame-side member is constituted by a ring-like member that is adapted to be inserted onto said shaft and to be turned around said shaft, and that is separated from and independent of said frame,
wherein said frame is inserted onto said shaft and disposed by being arranged with said frame-side member in a direction of an axis of said shaft in such a way as to freely turn around said shaft;
wherein a fitting structure, in which a clutch convex part and a clutch concave part are fitted to each other, is formed in an abutting surface portion between said frame-side member and said frame arranged around said shaft,
wherein a pushing force acting in a direction of an axis of said shaft is applied by a spring member to between said frame-side member and said frame to thereby hold said clutch convex part and said clutch concave part in a state in which said clutch convex part and said clutch concave part are fitted to each other in said abutting surface portion, and wherein when an external force acting around an axis of said shaft and having a magnitude, which is equal to or more than a predetermined value, is applied to said frame, fitting of said clutch convex part into said clutch concave part provided in said abutting surface portion is canceled against the pushing force of said spring member, so that said frame is separated from said frame member and singly turned by the external force around said shaft.

6. A manually folded type rearview mirror according to claim 5, wherein said turning operation transmitting mechanism transmits the operating force of said turning operation means to said frame through said frame-side member.

7. A manually folded type rearview mirror according to claim 4, wherein said frame-side member is constituted by a ring-like member that is adapted to be inserted onto said shaft and to be turned around said shaft, and that is separated from and independent of said frame,
wherein said frame is inserted onto said shaft and disposed by being arranged with said frame-side member in a direction of an axis of said shaft in such a way as to freely turn around said shaft;
wherein a fitting structure, in which a clutch convex part and a clutch concave part are fitted to each other, is formed in an abutting surface portion between said frame-side member and said frame arranged around said shaft,
wherein a pushing force acting in a direction of an axis of said shaft is applied by a spring member to between said frame-side member and said frame to thereby hold said clutch convex part and said clutch concave part in a state in which said clutch convex part and said clutch concave part are fitted to each other in said abutting surface portion, and wherein when an external force acting around an axis of said shaft and having a magnitude, which is equal to or more than a predetermined value, is applied to said frame, fitting of said clutch convex part into said clutch concave part provided in said abutting surface portion is canceled against the pushing force of said spring member, so that said frame is separated from said frame member and singly turned by the external force around said shaft.

8. A manually folded type rearview mirror according to claim 7, wherein said turning operation transmitting mechanism transmits the operating force of said turning operation means to said frame through said frame-side member.
